# EUROPÄISCHE PATENTSCHRIFT

(11) **EP 3 649 032 B1**
(45) Veröffentlichungstag und Bekanntmachung des Hinweises auf die Patenterteilung: **16.03.2022**
(21) Anmeldenummer: 18727226.5
(22) Anmeldetag: 18.05.2018
(51) Int. Cl.: B61F 1/08, B61F 5/24, B61C 15/04

(54) **BALLASTANORDNUNG FÜR EIN SCHIENENFAHRZEUG UND VERFAHREN ZUM HERSTELLEN EINER BALLASTVORRICHTUNG**
BALLAST ARRANGEMENT FOR A RAIL VEHICLE, AND METHOD FOR PRODUCING A BALLAST DEVICE
ENSEMBLE DE LESTAGE POUR VÉHICULE FERROVIAIRE ET PROCÉDÉ DE FABRICATION D'UN DISPOSITIF DE LESTAGE

(30) Priorität: 14.08.2017 DE 102017214140
(43) Veröffentlichungstag der Anmeldung: 13.05.2020
(73) Patentinhaber: Siemens Mobility GmbH, 81739 München (DE)
(72) Erfinder: MÜHL, Franz, 85356 Freising (DE)
(86) Internationale Anmeldenummer: PCT/EP2018/063064
(87) Internationale Veröffentlichungsnummer: WO 2019/034294

(56) Entgegenhaltungen:
- EP-A1- 2 165 910
- DE-A1- 3 023 382
- DE-B1- 1 455 141
- GB-A- 908 886
- JP-A- 2006 137 238
- US-A- 1 835 673
- US-A- 2 942 558

## Beschreibung

Die Erfindung betrifft eine Ballastanordnung für ein Schienenfahrzeug mit mindestens einer Ballastvorrichtung, bei der die mindestens eine Ballastvorrichtung einen Gewichtskörper aus Beton, mindestens eine integrierte Metallarmierung und mindestens eine in den Gewichtskörper integrierte Befestigungsvorrichtung aufweist. Des Weiteren betrifft die Erfindung ein Verfahren zum Herstellen einer erfindungsgemäßen Ballastanordnung.

Anders als bei konventionellen Straßenfahrzeugen, ist es bei Schienenfahrzeugen zum Einhalten von Zugkräften des Schienenfahrzeuges notwendig, dass ein Schienenfahrzeug ein Mindestgewicht aufweist und die Belastung der Antriebsräder gleichmäßig verteilt bzw. anpassbar an die zu transportierende Last ist, um die durch die Antriebsräder übertragenen Reibungskräfte zu erreichen. Um dieses Mindestgewicht zu erreichen werden Ballastgewichte, meist in Form von fest installierten Stahlplatten, in Schienenfahrzeuge eingebaut. Dabei stellen die Ballastgewichte sowohl einen Kostenfaktor als auch einen Raumfaktor dar. Platz steht in Schienenfahrzeuge nur begrenzt zur Verfügung, da der Raum für Ausrüstungsteile und Zubehör benötigt wird. Im Schienenverkehr treten insbesondere in Fahrtrichtung hohe Beschleunigungskräfte auf. Um ein Kippen des Ballastgewichtes zu vermeiden, werden Ballastmaterialien mit einer hohen Dichte verwendet, so dass die Ballastkörper möglichst kompakt ausgestaltet werden können. Die bisher hierzu verwendeten Stahlplatten, welche meist fest in den Schienenfahrzeugen verbaut werden, sind jedoch kostenintensiv.

Alternativ wird die verwendete Blechstärke lokal im Schienenfahrzeug erhöht oder anstatt von geschweißten Hohlträgern massive Brammen verwendet. Diese bieten jedoch nicht die notwendige Flexibilität, um bei unterschiedlichen Belastungen des Schienenfahrzeuges entsprechend variabel einstellbar zu sein.

Das Dokument EP 2 165 910 A1 beschreibt ein Schienenfahrzeug mit zwei oder mehr Radachsen und einem Lokrahmen. Eine Schwingungstilgungsvorrichtung ist vorgesehen, die eine oder mehrere Tilgermassen aus Metall umfasst, die in Fahrzeugquerrichtung elastisch mit dem Lokrahmen verbunden sind und die beim Auftreten von Eigenschwingungen des Schienenfahrzeugs im Wesentlichen in Gegenphase zu diesen schwingen.

Das Dokument US 1 835 673 A beschreibt eine Elektrolokomotive, bei der in einer sogenannten "underframe structure" Ballast vorgesehen ist. Als Ballast wird eine Mischung aus Beton und Eisenschrott verwendet. in den Gewichtskörper integrierte Befestigungsvorrichtung aufweist.

Aufgabe der Erfindung ist es eine variable und preiswerte Ballastanordnung für ein Schienenfahrzeug vorzuschlagen. Des Weiteren ist es Aufgabe der Erfindung ein Verfahren zum Herstellen einer derartigen Ballastanordnung vorzuschlagen.

Gelöst wird die Aufgabe durch den Gegenstand des unabhängigen Patentanspruchs 1 und durch den Gegenstand des unabhängigen Patentanspruchs 9. Vorteilhafte Ausgestaltungen der Erfindung sind Gegenstand von jeweils abhängigen Unteransprüchen.

Nach einem Aspekt der Erfindung wird eine Ballastanordnung für ein Schienenfahrzeug mit mindestens einer Ballastvorrichtung bereitgestellt. Die mindestens eine Ballastvorrichtung weist einen Gewichtskörper aus Beton, mindestens eine integrierte Metallarmierung und mindestens eine in den Gewichtskörper integrierte Befestigungsvorrichtung auf, bei der die Ballastvorrichtung aus einer Mischung aus Normalbeton und Schwerbeton hergestellt ist, um die Dichte des Gewichtskörpers gezielt zu beeinflussen und um die Masse des Gewichtskörpers zu steuern, so dass gegossene Gewichtskörper der Ballastvorrichtung bei gleichbleibenden Einbaubedingungen und gleichbleibendem Platzbedarf unterschiedliche Ballastier- und Trimmaufgaben erfüllen.

Eine Ballastvorrichtung besteht dabei aus einem Betonkörper mit einer integrierten Metallarmierung. Dabei können in den Betonkörper eine oder mehrere Befestigungsvorrichtungen eingebracht sein. Die Befestigungsvorrichtungen können dabei unterschiedlich ausgestaltet oder von der gleichen Art sein. Durch die erfindungsgemäße Ballastanordnung können große Mengen von kostenintensivem Stahl durch vergleichsweise kostengünstigen Beton ersetzt werden. Somit können erhebliche Kosteneinsparungen vorgenommen werden.

Das Integrieren einer Metallarmierung in die mindestens eine Ballastvorrichtung kann dabei die Festigkeit und Belastbarkeit der Ballastvorrichtung erhöhen. Darüber hinaus ermöglicht ein Integrieren der mindestens einen Befestigungsvorrichtung in mindestens eine Ballastvorrichtung ein Anbringen von Werkzeugen, Zubehör, Ausstattungsgegenständen oder weiteren Ballastvorrichtungen. Somit kann die Ballastanordnung besonders platzsparend in das Schienenfahrzeug integriert oder am Schienenfahrzeug befestigt werden.

Eine kompakte Ballastanordnung ermöglicht es durch eine geringe Bauhöhe den über und auf der Ballastanordnung freien Platz oder freien Oberflächen anderweitig nutzbar zu machen. Beispielsweise kann der Platz als Ablage oder Aufnahmebereich für Ausstattungsgegenstände oder Werkzeuge verwendet werden. Gegenüber der Stahlvariante ergibt sich eine deutliche Kostenreduzierung um ca. 50 Prozent bei einer zusätzlich erreichten Variabilität der Ballastanordnung durch ein mögliches Einsetzen oder Entnehmen von einzelnen oder mehreren Ballastvorrichtungen. Die Ballastanordnung weist dabei nur einen geringen Platzbedarf auf und ermöglich aufgrund der mindestens einen Befestigungsvorrichtung eine Anbaubarkeit von Ausrüstungsgegenständen sowie von notwendigem Zubehör.

Nach einer weiteren Ausführungsform ist der Gewichtskörper der Ballastvorrichtung flächig ausgestaltet. Flächig ist hierbei als eine rechteckige oder plattenförmige Grundform zu verstehen, wobei die größten Flächen parallel zu einem Unterboden oder einem Fußboden des Schienenfahrzeuges angeordnet werden können. Alternativ kann die Ballastvorrichtung auch in Form einer Wanne zum Aufnehmen von Zubehör ausgeführt sein. Durch die flächige gestaltete Form einer oder mehrerer Ballastvorrichtungen können bei der Notwendigkeit einer Ballastanordnung mit größerer Masse mehrere Ballastvorrichtungen übereinander angeordnet werden und somit präzise ein gewünschtes Ausgleichsgewicht eingestellt werden.

Nach einer weiteren Ausführungsform sind mehrere Ballastvorrichtungen variierbar übereinander oder nebeneinander miteinander und/oder am Schienenfahrzeug befestigbar. Die Ballastvorrichtungen können dabei flexibel aneinander und/oder am Schienenfahrzeug angeordnet werden. Alternativ kann im Fall von mehreren übereinander gestapelten Ballastvorrichtungen die unterste Ballastvorrichtung mit dem Schienenfahrzeug und einer weiteren Ballastvorrichtung verbunden sein. Alle weiteren gestapelten Ballastvorrichtungen können jeweils mit einer unter ihnen und einer über ihnen liegenden Ballastvorrichtung verbunden werden. Zum Verbinden der Ballastvorrichtungen eignen sich beispielsweise Durchbohrungen für Schraub-, oder Steckverbindungen sowie korrespondierende Gewindehülsen oder Aufnahmen. Je nach Anforderungen und benötigter Gewichtslast kann somit eine individuelle Anpassung vorgenommen werden.

Gemäß einem weiteren Ausführungsbeispiel der Ballastanordnung sind Werkzeuge oder Ausrüstungsgegenstände durch die mindestens eine integrierte Befestigungsvorrichtung an der Ballastvorrichtung befestigbar. Durch die relativ einfache Formgebung kann der Gewichtskörper sowohl als einfacher beispielsweise rechteckiger Gewichtskörper ohne weitere Zusatzfunktion ausgeführt werden, wie auch beispielsweise als ein Gewichtskörper mit integrierten Taschen oder als Betonwanne, wobei die Taschen zur Aufnahme von Zubehörteilen geeignet sein können. Durch das Einbringen von weiteren Befestigungselementen in die Ballastvorrichtung können auf dem Gewichtskörper weitere Ausrüstungsgegenstände montiert und mindestens eine Fläche des Gewichtskörpers zusätzlich für die Platzierung oder Aufbewahrung der Ausrüstungsgegenstände verwendet werden.

Gemäß einem weiteren Ausführungsbeispiel ist die mindestens eine Befestigungsvorrichtung eine Gewindebuchse, eine Durchgangsbohrung, eine Befestigungsschiene, eine taschenförmige Ausbuchtung, ein Haken oder eine Ringöse. Die mindestens eine Befestigungsvorrichtung kann beispielsweise an einer Oberseite, einer Unterseite oder an einer parallel zu den Seitenwänden des Schienenfahrzeuges verlaufenden Seite einer Ballastvorrichtung angeordnet sein. Somit können nebeneinander und übereinander angeordnete Ballastvorrichtungen am Schienenfahrzeug montiert werden. Die mindestens eine Befestigungsvorrichtung kann auch eine oder mehrere Durchgangsbohrungen zum Führen von Schrauben oder von Gewindestangen sein, welche die mindestens eine Ballastvorrichtung am Schienenfahrzeug kraftschlüssig oder reibschlüssig befestigen können. Es können auch mehrere unterschiedliche Befestigungsvorrichtungen auf einer Ballastvorrichtung angeordnet sein. Beispielsweise kann eine erste Ballastvorrichtung an dem Schienenfahrzeug mit durch Durchgangsbohrungen geführten Schrauben befestigt sein. Die erste Ballastvorrichtung kann Gewindehülsen zum Aufnehmen einer zweiten Ballastvorrichtung aufweisen, wobei die zweite Ballastvorrichtung nur Durchgangsbohrungen zum Verschrauben der zweiten Ballastvorrichtung mit der ersten Ballastvorrichtung aufweisen kann.

Nach einer weiteren Ausführungsform ist die mindestens eine Befestigungsvorrichtung aus Stahl oder Beton hergestellt. Die Befestigungsvorrichtung kann auch ein in die Ballastvorrichtung eingebrachtes Fach, eine Ausnehmung oder eine Tasche sein. Es können Ausrüstungsgegenstände oder Werkzeuge eingelegt und von außen, beispielsweise mit einem Gurt, fixiert werden. Alternativ können Gewindehülsen oder Ringösen aus Metall, wie beispielsweise Stahl, in den Beton eingebracht sein. Die Befestigungsvorrichtungen können mit der Metallarmierung kraftschlüssig, stoffschlüssig oder formschlüssig verbunden sein, sodass eine robuste Verbindung der Ballastvorrichtungen möglich ist.

Gemäß einem weiteren Ausführungsbeispiel weist die mindestens eine Ballastvorrichtung entsprechend ihrer Masse eine Kennzeichnung auf. Insbesondere austauschbare Ballastvorrichtungen können entsprechend ihrer Masse durch unterschiedliche Farben, Kennnummern, Symbole oder Maßeinheiten markiert sein. Die Kennzeichnungen können dabei auf eine Beschichtung der Ballastvorrichtung oder direkt auf den Gewichtskörper der Ballastvorrichtung lackiert werden. Alternativ können die Kennzeichnungen in den Beton des Gewichtskörpers eingegossen oder eingeprägt sein.

Gemäß einem weiteren Ausführungsbeispiel ist die mindestens eine Ballastvorrichtung beschichtet oder lackiert. Die Ballastvorrichtungen können durch eine Lackierung farblich an den Farbton benachbarter Bauteile angepasst werden. Bei Anbringung der Ballastvorrichtung unter dem Schienenverkehrsfahrzeug kann die Ballastvorrichtung mit einer stoßdämpfenden Deckschicht aus einer Kunststoffbeschichtung versehen werden, um die Betonoberfläche vor Beschädigung z.B. durch Schotterflug zu schützen. Eine derartige Beschichtung kann beispielsweise eine Dickschicht-Kunststoffbeschichtung sein, welche je nach Masse der Ballastvorrichtung unterschiedlich gefärbt sein kann. Alternativ kann die Dickschicht-Kunststoffbeschichtung für alle Ballastvorrichtungen eine an die Ausstattung des Schienenfahrzeugs angepasste, einheitliche Farbe aufweisen.

Nach einem weiteren Aspekt der Erfindung wird ein Verfahren zum Herstellen einer Ballastvorrichtung für ein Schienenfahrzeug zum Anordnen in einer erfindungsgemäßen Ballastanordnung bereitgestellt. In einem Schritt wird eine Schalung erstellt. Die erstellte Schalung weist einen Hohlraum zum Aufnehmen eines Füllmaterials auf. In den Hohlraum wird anschließend eine Metallarmierung eingebracht. In einem weiteren Schritt wird mindestens eine Befestigungsvorrichtung eingebracht. Nach einem Bereitstellen eines Füllmaterials bestehend aus einer Mischung aus Normalbeton und Schwerbeton, wird der Hohlraum der Schalung mit dem Füllmaterial befüllt. Nach einem Aushärten des Füllmaterials zu einer Ballastvorrichtung in der Schalung kann die Schalung von der Ballastvorrichtung entfernt werden.

Die Schalung kann beispielsweise aus Holz oder einem Glasfaserkunststoff bestehen. Hierdurch können Ballastvorrichtungen in vielfältigen, auch dünnwandigen Formen hergestellt werden. Beispielsweise kann eine minimale Wandstärke oder Dicke der Ballastvorrichtung von 40 mm erreicht werden. Alternativ oder zusätzlich kann eine Schalung auch aus Metall bestehen und nach dem Befüllen mit dem Füllmaterial nach dem Aushärten an dem Ballastkörper bzw. der Ballastvorrichtung verbleiben. In diesem Fall kann die Befestigungsvorrichtung außen an der Schalung aus Metall und die Armierung des Ballastkörpers innen an der Schalung aus Metall befestigt sein und somit einen Kraftfluss von der mindestens einen Befestigungsvorrichtung durch die Schalung in die Armierung gewährleisten. Durch Einbringen von Befestigungsvorrichtungen in die Ballastvorrichtung kann die Ballastvorrichtung sowohl im Schienenfahrzeug als auch unter dem Schienenfahrzeug angebracht werden. Insbesondere können auch mehrere Ballastvorrichtungen mechanisch miteinander verbunden und übereinander gestapelt werden. Hierdurch kann eine benötigte Masse präzise durch mehrere Ballastvorrichtungen eingestellt werden.

Durch eine Herstellung der Ballastvorrichtung aus einem Betongemisch kann die Herstellung auch bei geringen Stückzahlen ökonomisch sein. Bei größeren Stückzahlen kann beispielsweise eine Form bzw. Schalung aus einem Glasfaserkunstoff verwendet werden. Für einfach geformte Ballastvorrichtungen kann eine Schalung aus einem Holz ausreichend sein. Eine Schalung kann technisch einfach angepasst oder verändert werden. Das Füllmaterial kann ebenfalls technisch einfach und flexibel zum Einstellen bestimmter materieller Eigenschaften einer Ballastvorrichtung angepasst werden. Hierdurch können auch Prototypen und individuell angefertigte Ballastvorrichtungen preiswert und schnell hergestellt werden.

Bei dem Herstellungsverfahren können Befestigungsvorrichtungen individuell und abhängig von den Anforderungen an die Ballastvorrichtung im Füllmaterial angeordnet werden. Durch das Verfahren können sowohl Herstellungskosten als auch Materialkosten von Ballastvorrichtungen reduziert werden.

Gemäß dem Verfahren wird als Füllmaterial eine Mischung aus Normalbeton und Schwerbeton verwendet. Die Masse des Gewichtskörpers der Ballastvorrichtung wird bei einer Verwendung von Normalbeton mit einer üblichen Trockenrohdichte ohne eine Metallarmierung von ca. 2000 und 2600 kg/m³ durch Verwendung von Schwerbeton mit einer üblichen Trockenrohdichte ohne eine Metallarmierung bis ca. 4500 kg/m³ in seiner Masse erhöht.

Durch eine Verwendung von einer beliebigen Mischung von Normal- und Schwerbeton kann die Dichte des Gewichtkörpers gezielt beeinflusst und die Masse des Gewichtkörpers bei der Herstellung gesteuert werden. Dadurch können die in einer einzigen Schalung gegossenen Gewichtskörper der Ballastvorrichtung bei gleichbleibenden Einbaubedingungen und gleichbleibendem Platzbedarf unterschiedliche Ballastier- und Trimmaufgaben erfüllen.

Gemäß einer weiteren Ausführungsform des Verfahrens wird eine Dichte des Füllmaterials bei einem Anmischen des Füllmaterials durch mindestens eine Zugabe erhöht. Vorzugsweise können ein oder mehrere Materialien mit einer höheren Dichte als das Füllmaterial verwendet werden. Hierdurch kann die Ballastvorrichtung durch eine höhere Dichte kompakter geformt sein bei gleichbleibender Masse. Alternativ oder zusätzlich können Füllstoffe zum Ändern von chemischen Eigenschaften von Beton beigemischt werden. Somit können verschiedene Eigenschaften, wie beispielsweise eine höhere Festigkeit, eingestellt werden. Hierdurch kann die Ballastvorrichtung an unterschiedliche Einsatzmöglichkeiten optimiert werden.

Nach einer weiteren Ausführungsform des Verfahrens wird als die mindestens eine Zugabe ein Stahlschrot und/oder Magnetit verwendet. Alternativ oder zusätzlich können auch Bestandteile aus Gusseisen dem Füllmaterial beigefügt werden. Zusätzliche Metallplatten können in einer weiteren Erhöhung der Masse der Ballastvorrichtung führen. Des Weiteren kann auch recyceltes Metall oder Gestein dem Füllmaterial beigemischt werden. Hierdurch kann eine Masse der Ballastvorrichtung gezielt eingestellt werden.

Gemäß einer weiteren Ausführungsform des Verfahrens wird dieselbe Schalung zum Anfertigen mehrerer Ballastvorrichtungen verwendet. Hierdurch kann die Schalung wiederverwendbar ausgeführt sein. Vorzugsweise kann die Schalung mit einem Trennmittel vor einem Einfüllen des Füllmaterials beschichtet werden. Hierdurch kann die Ballastvorrichtung leichter entformt und eine Beschädigung der Schalung bei der Entformung der Ballastvorrichtung vermieden werden. Insbesondere kann hierdurch eine kosteneffektive Herstellung der Ballastvorrichtung realisiert werden, da keine wiederholte Herstellung der Schalung erforderlich ist. Durch wiederholtes Verwenden der Schalung können die Abmessungen der hergestellten Ballastvorrichtungen konstant bleiben. Eine Streuung der Abmessungen durch erneute Herstellung der Schalung kann ausgeschlossen werden.

Nach einer weiteren Ausführungsform des Verfahrens wird die Ballastvorrichtung mit einer Kunststoffbeschichtung oder einer Lackierung überzogen. Nach einem Aushärten des Füllmaterials und dem Formen einer soliden Ballastvorrichtung kann in einem weiteren Verfahrensschritt die Ballastvorrichtung zumindest in einem sichtbaren Bereich mit einer Farbschicht oder einer Kunststoffschicht überzogen werden. Insbesondere kann eine Ballastvorrichtung farblich an benachbarte Bauteile des Schienenfahrzeugs angepasst werden. Im sichtbaren Bereich kann die Ballastvorrichtung beispielsweise eine geringe Rauigkeit aufweisen und somit ohne eine Lackierung oder eine Beschichtung verbaut werden. Die sichtbaren Bereiche der Ballastvorrichtung können beispielsweise Seitenflächen der Ballastvorrichtung sein.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine perspektivische Darstellung einer Ballastanordnung gemäß einem ersten Ausführungsbeispiel,
- FIG 2: eine perspektivische Darstellung einer Ballastanordnung gemäß einem zweiten Ausführungsbeispiel und
- FIG 3: ein schematisches Ablaufdiagramm eines Verfahrens zum Herstellen einer Ballastvorrichtung gemäß einer Ausführungsform.

In den Figuren weisen dieselben konstruktiven Elemente jeweils dieselben Bezugsziffern auf.

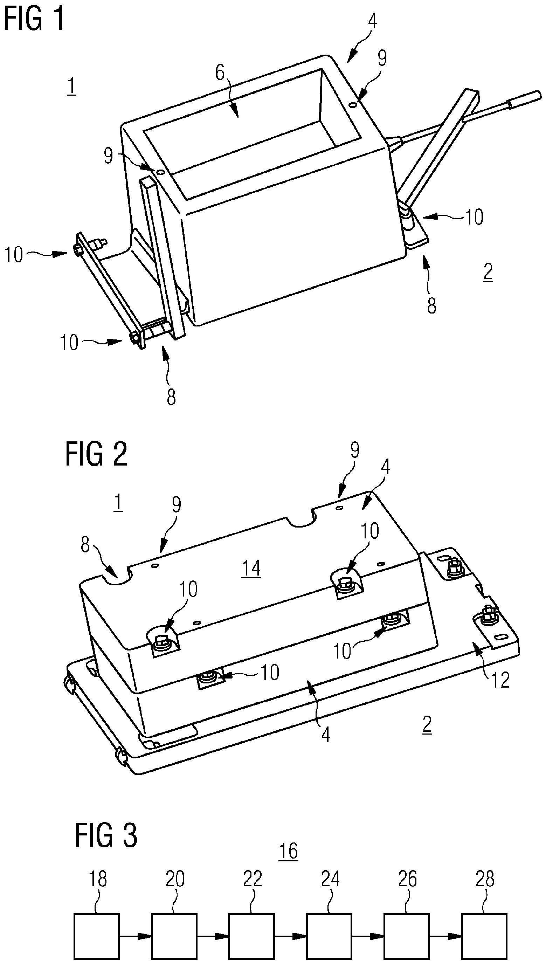

Die FIG 1 zeigt eine perspektivische Darstellung einer Ballastanordnung 1 für ein Schienenfahrzeug 2 gemäß einem ersten Ausführungsbeispiel. Es ist insbesondere ein Ausschnitt einer Unterseite eines Schienenfahrzeugs 2 dargestellt, an welchem die Ballastanordnung 1 angeordnet ist. Die Ballastanordnung 1 dient zum Ausgleichen einer Masseverteilung entlang des Schienenfahrzeugs 2, sodass ein Fahrverhalten des Schienenfahrzeugs 2 optimiert werden kann durch eine gleichmäßige Masseverteilung.

Gemäß dem ersten Ausführungsbeispiel weist die Ballastvorrichtung 1 eine Ballastvorrichtung 4 auf. Die Ballastvorrichtung 4 ist rechteckig geformt und weist einen mit einer Kunststoffbeschichtung überzogen Gewichtskörper aus einem Beton auf. Die Ballastvorrichtung 4 weist eine nicht dargestellte Metallarmierung zum mechanischen Verstärken des Gewichtkörpers der Ballastvorrichtung 4 auf.

Die Ballastvorrichtung 4 ist hier mit einer wannenförmigen Aussparung 6 ausgeführt. Somit kann die Ballastvorrichtung 4 zusätzlich zu einem lokalen Erhöhen einer Masse des Schienenfahrzeugs 2 als ein Ablagefach verwendet werden. In den kunststoffbeschichteten Gewichtskörper ist an zwei gegenüberliegenden Seiten der Ballastvorrichtung 4 jeweils eine Befestigungsvorrichtung 8 mit zwei Schraubverbindungen 10 stoffschlüssig eingebracht. Die Befestigungsvorrichtungen 8 ragen hierbei in den Gewichtskörper der Ballastvorrichtung 4 hinein und können mit der Metallarmierung des Gewichtskörpers verschweißt oder verschraubt sein.

Die Befestigungsvorrichtungen 8 sind Metallplatten 10 mit eingebrachten Gewinden oder Bohrungen zum Aufnehmen von Schrauben 10. Über die Schraubverbindungen 10 kann die Ballastvorrichtung 4 mit dem Schienenfahrzeug 2 mechanisch verbunden werden. Auf einer freien Oberfläche der Ballastvorrichtung 4 sind zwei Gewindehülsen 9 als zusätzliche Befestigungsvorrichtungen 8 zum Aufnehmen von Schrauben und zum Anbringen weiterer Ballastvorrichtungen 4 in den Gewichtskörper eingebracht.

In FIG 2 ist eine perspektivische Darstellung einer Ballastanordnung 1 an einer Unterseite eines Schienenfahrzeugs 2 gemäß einem zweiten Ausführungsbeispiel dargestellt. Auf der Unterseite des Schienenfahrzeugs 2 ist eine Stahlplatte 12 aus einem Stahlguss befestigt. Auf der Stahlplatte 12 sind zwei flächig ausgebildete Ballastvorrichtungen 4 durch Schraubverbindungen 10 befestigt. Die Ballastvorrichtungen 4 weisen, der Übersicht halber nicht dargestellte, Durchgangsöffnungen 8 als Befestigungsmittel 8 zum Aufnehmen der Schraubverbindungen 10 auf. Es sind auf jeder Ballastvorrichtung 4 jeweils vier Durchgangsöffnungen 8 angeordnet.

Neben den Durchgangsöffnungen 8 als Befestigungsmittel 8 weisen die Ballastvorrichtungen 4 jeweils vier zu den Durchgangsöffnungen 8 örtllich versetzt angeordnete Gewindehülsen 9 auf. Die Gewindehülsen 9 sind ebenfalls Befestigungsvorrichtungen 8 der Ballastvorrichtungen 4. Die Gewindehülsen 9 sind parallel zu den Durchgangsöffnungen 8 in die aus Beton hergestellten Gewichtskörper eingegossen. Insbesondere können die Gewindehülsen 9 als auch die in Form von Hülsen realisierte Durchgangsöffnungen 8 mit der Metallarmierung der Gewichtskörper verbunden sein, sodass eine robuste und erschütterungsresistente Verbindung mehrerer Ballastvorrichtungen 4 ermöglicht wird.

Die Durchgangsöffnungen 8 und die Gewindehülsen 9 sind hierbei derart in den Ballastvorrichtungen 4 eingebracht, das nach einem Verdrehen von einer flächigen Ballastvorrichtung 4 um 180° entlang ihrer flächigen Ausdehnung bzw. ihrer Auflageflächen 14 gegenüber einer anderen flächig geformten Ballastvorrichtung 4 die Durchgangsöffnungen 8 einer Ballastvorrichtung 4 über den Gewindehülsen der zweiten Ballastvorrichtung 4 angeordnet sind. Hierdurch kann die erste Ballastvorrichtung 4 mit der zweiten Ballastvorrichtung 4 durch Schrauben 10 verschraubt werden. Insbesondere können durch eine derartige Anordnung von Gewindehülsen 9 und Durchgangsöffnungen 8 beliebig viele Ballastvorrichtungen 4 übereinander gestapelt und miteinander durch Schrauben 10 befestigt werden. Hierfür weisen die Ballastvorrichtungen 4 im Bereich der Durchgangsöffnungen 8 jeweils eine Vertiefung zum Aufnehmen eines Schraubenkopfes einer Schraube 10 auf. Somit können ebene Auflageflächen 14 zwischen zwei Ballastvorrichtungen 4 und eine dauerhafte Verbindung der Ballastvorrichtungen 4 ermöglicht werden.

Die Ballastvorrichtungen 4 weisen gemäß dem zweiten Ausführungsbeispiel eine farbige Lackierung zum signalisieren einer Masse der jeweiligen Ballastvorrichtungen 4 auf. Zum Befestigen der Ballastvorrichtungen 4 auf der Stahlplatte 12 sind zu den Durchgangsöffnungen 8 der Ballastvorrichtung 4 korrespondierende Gewinde zum Aufnehmen von Schrauben 10 und zum Befestigen einer Ballastvorrichtung 4 an der Stahlplatte 12 eingebracht.

Die FIG 3 zeigt ein schematisches Ablaufdiagramm eines Verfahrens 16 zum Herstellen einer Ballastvorrichtung 4 für ein Schienenfahrzeug 2 gemäß einer Ausführungsform. In einem ersten Schritt wird eine Schalung als Form für den aus einem Beton herzustellenden Gewichtskörper der Ballastvorrichtung 4 erstellt 18.

In der erstellten Schalung entsteht ein Hohlraum zum Bilden einer Form des Gewichtskörpers. In den Hohlraum wird eine Metallarmierung eingelegt 20.

In einem weiteren Schritt werden die Befestigungsvorrichtungen 8, 8 innerhalb der Schalung angeordnet 22. Die Befestigungsvorrichtungen 8, 9 können dabei durch eine Maske oder einen Rahmen miteinander verbunden sein, sodass ein schnelles und automatisiertes Einbringen der Befestigungsvorrichtungen 8, 9 in den Gewichtskörper ermöglicht wird. Insbesondere können die Befestigungsvorrichtungen 8, 9 Abstandselemente zu der Schalung aufweisen. Vorzugsweise ist das Füllmaterial bei diesem Schritt des Verfahrens 16 noch verformbar. Alternativ können die Befestigungsvorrichtungen 8, 9 gemeinsam mit der Metallarmierung in den Hohlraum der Schalung vor dem Einbringen des Füllmaterials angeordnet werden.

In einem weiteren Schritt des Verfahrens 16 wird ein Füllmaterial bestehend auf mindestens einem Beton bereitgestellt und in die Schalung mit der in den Hohlraum eingelegten Metallarmierung gegossen. Hierbei wird der Hohlraum mit dem Füllmaterial vollständig oder schrittweise befüllt 24.

In letzten Schritten des Verfahrens 16 kann das Füllmaterial mit den Befestigungsvorrichtungen 8, 9 und der Metallarmierung zu einer Ballastvorrichtung 4 aushärten 26 und aus der Schalung entformt werden 28.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ballastanordnung (1) für ein Schienenfahrzeug (2) mit mindestens einer Ballastvorrichtung (4),
- bei der die mindestens eine Ballastvorrichtung (4) einen Gewichtskörper aus Beton, mindestens eine integrierte Metallarmierung und mindestens eine in den Gewichtskörper integrierte Befestigungsvorrichtung (8, 9) aufweist,
- bei der die Ballastvorrichtung aus einer Mischung aus Normalbeton und Schwerbeton hergestellt ist, um die Dichte des Gewichtskörpers gezielt zu beeinflussen und um die Masse des Gewichtskörpers zu steuern,
- so dass gegossene Gewichtskörper der Ballastvorrichtung bei gleichbleibenden Einbaubedingungen und gleichbleibendem Platzbedarf unterschiedliche Ballastier- und Trimmaufgaben erfüllen.

2. Ballastanordnung nach Anspruch 1, wobei der Gewichtskörper der Ballastvorrichtung (4) flächig ausgestaltet ist.

3. Ballastanordnung nach Anspruch 1 oder 2, wobei mehrere Ballastvorrichtungen (4) variierbar übereinander oder nebeneinander miteinander und/oder am Schienenfahrzeug (2) befestigbar sind.

4. Ballastanordnung nach einem der Ansprüche 1 bis 3, wobei Werkzeuge oder Ausrüstungsgegenstände durch die mindestens eine integrierte Befestigungsvorrichtung (8, 9) an der Ballastvorrichtung (4) befestigbar sind.

5. Ballastanordnung nach einem der Ansprüche 1 bis 4, wobei die mindestens eine Befestigungsvorrichtung (8, 9) eine Gewindebuchse, eine Durchgangsbohrung, eine Befestigungsschiene, eine taschenförmige Ausbuchtung, ein Haken oder eine Ringöse ist.

6. Ballastanordnung nach einem der Ansprüche 1 bis 5, wobei die mindestens eine Befestigungsvorrichtung (4) aus Stahl oder Beton hergestellt ist.

7. Ballastanordnung nach einem der Ansprüche 1 bis 6, wobei die mindestens eine Ballastvorrichtung (4) entsprechend ihrer Masse eine Kennzeichnung aufweist.

8. Ballastanordnung nach einem der Ansprüche 1 bis 7, wobei die mindestens eine Ballastvorrichtung (4) beschichtet oder lackiert ist.

9. Verfahren (16) zum Herstellen einer Ballastvorrichtung (4) für ein Schienenfahrzeug (2) zum Anordnen in einer Ballastanordnung (1) nach einem der vorhergehenden Ansprüche, aufweisend die Schritte:
- Erstellen einer Schalung (18),
- Einbringen einer Metallarmierung in einem Hohlraum der Schalung (20),
- Einbringen von mindestens einer Befestigungsvorrichtung (8, 9, 22),
- Bereitstellen eines Füllmaterials bestehend aus einer Mischung aus Normalbeton und Schwerbeton,
- Befüllen des Hohlraums (24) der Schalung mit dem Füllmaterial,
- Aushärten des Füllmaterials (26) zu einer Ballastvorrichtung (4) in der Schalung und Entfernen der Schalung (28) von der Ballastvorrichtung (4).

10. Verfahren nach Anspruch 9, wobei eine Dichte des Füllmaterials bei einem Anmischen des Füllmaterials durch mindestens eine Zugabe erhöht wird.

11. Verfahren nach Anspruch 10, wobei als die mindestens eine Zugabe ein Stahlschrot und/oder Magnetit verwendet wird.

12. Verfahren nach einem der Ansprüche 9 bis 11, wobei dieselbe Schalung zum Anfertigen mehrerer Ballastvorrichtungen (4) verwendet wird.

13. Verfahren nach einem der Ansprüche 9 bis 12, wobei die Ballastvorrichtung (4) mit einer Kunststoffbeschichtung oder einer Lackierung überzogen wird.

## Claims

1. Ballast arrangement (1) for a rail vehicle (2), having at least one ballast device (4),
- in which the at least one ballast device (4) has a concrete weight body, at least one integrated metal reinforcement and at least one securing device (8, 9) integrated into the weight body,
- in which the ballast device is produced from a mixture of normal concrete and heavy concrete in order to influence the density of the weight body in a targeted manner and in order to control the mass of the weight body,
- such that cast weight bodies of the ballast device fulfil different ballasting and balancing tasks given constant installation conditions and a constant space requirement.

2. Ballast arrangement according to Claim 1, wherein the weight body of the ballast device (4) is configured in a planar manner.

3. Ballast arrangement according to Claim 1 or 2, wherein a plurality of ballast devices (4) are able to be secured together and/or to the rail vehicle (2) in a variable manner one on top of another or alongside one another.

4. Ballast arrangement according to one of Claims 1 to 3, wherein tools or items of equipment are able to be secured to the ballast device (4) by the at least one integrated securing device (8, 9).

5. Ballast arrangement according to one of Claims 1 to 4, wherein the at least one securing device (8, 9) is a threaded bushing, a through-hole, a securing rail, a pocket-like indentation, a hook or an eyelet.

6. Ballast arrangement according to one of Claims 1 to 5, wherein the at least one securing device (4) is made of steel or concrete.

7. Ballast arrangement according to one of Claims 1 to 6, wherein the at least one ballast device (4) has an identifier relating to its mass.

8. Ballast arrangement according to one of Claims 1 to 7, wherein the at least one ballast device (4) is coated or painted.

9. Method (16) for producing a ballast device (4) for a rail vehicle (2), for arranging in a ballast arrangement (1) according to one of the preceding claims, having the steps of:
- building a formwork (18),
- introducing a metal reinforcement into a cavity of the formwork (20),
- introducing at least one securing device (8, 9, 22),
- providing a filling material consisting of a mixture of normal concrete and heavy concrete,
- filling the cavity (24) of the formwork with the filling material,
- allowing the filling material to set (26) to form a ballast device (4) in the formwork and removing the formwork (28) from the ballast device (4).

10. Method according to Claim 9, wherein a density of the filling material is increased by at least one additive while the filling material is being mixed.

11. Method according to Claim 10, wherein steel shot and/or magnetite is used as the at least one additive.

12. Method according to one of Claims 9 to 11, wherein the same formwork is used to produce a plurality of ballast devices (4) .

13. Method according to one of Claims 9 to 12, wherein the ballast device (4) is coated with a plastics coating or paint.

## Revendications

1. Ensemble de lestage (1) pour véhicule ferroviaire (2) comportant au moins un dispositif de lestage (4),
- dans lequel l'au moins un dispositif de lestage (4) comporte un corps d'alourdissement en béton, au moins une armature en métal intégrée et au moins un dispositif de fixation (8, 9) intégré dans le corps d'alourdissement,
- dans lequel le dispositif de lestage est réalisé en un mélange de béton normal et de béton lourd pour influer de manière ciblée sur la densité du corps d'alourdissement et pour contrôler la masse du corps d'alourdissement,
- de sorte que des corps d'alourdissement coulés du dispositif de lestage remplissent des fonctions de lestage et d'équilibrage différentes face à des conditions de montage et à un besoin en espace constants.

2. Ensemble de lestage selon la revendication 1, dans lequel le corps d'alourdissement du dispositif de lestage (4) présente une forme plane.

3. Ensemble de lestage selon la revendication 1 ou 2, dans lequel plusieurs dispositifs de lestage (4) peuvent être fixés l'un à l'autre au-dessus l'un de l'autre ou côte-à-côte l'un de l'autre et/ou au véhicule ferroviaire (2).

4. Ensemble de lestage selon l'une des revendications 1 à 3, dans lequel des outils ou des équipements peuvent être fixés au dispositif de lestage (4) grâce à l'au moins un dispositif de fixation intégré (8, 9).

5. Ensemble de lestage selon l'une des revendications 1 à 4, dans lequel l'au moins un dispositif de fixation (8, 9) est un manchon fileté, un trou traversant, un rail de fixation, un renflement sous forme de poche, un crochet ou un œillet.

6. Ensemble de lestage selon l'une des revendications 1 à 5, dans lequel l'au moins un dispositif de fixation (4) est réalisé en acier ou en béton.

7. Ensemble de lestage selon l'une des revendications 1 à 6, dans lequel l'au moins un dispositif de lestage (4) comporte un marquage correspondant à sa masse.

8. Ensemble de lestage selon l'une des revendications 1 à 7, dans lequel l'au moins un dispositif de lestage (4) est pourvu d'un revêtement ou d'un vernis.

9. Procédé (16) de fabrication d'un dispositif de lestage (4) pour véhicule ferroviaire (2) prévu d'être disposé dans un ensemble de lestage (1) selon l'une des revendications précédentes, comportant les étapes suivantes :
- réalisation d'un coffrage (18),
- introduction d'une armature en métal dans une cavité du coffrage (20),
- introduction d'au moins un dispositif de fixation (8, 9, 22),
- mise à disposition d'un matériau de remplissage consistant en un mélange de béton normal et de béton lourd,
- remplissage de la cavité (24) du coffrage par le matériau de remplissage,
- durcissement du matériau de remplissage (26) pour donner un dispositif de lestage (4) dans le coffrage et retrait du coffrage (28) du dispositif de lestage (4).

10. Procédé selon la revendication 9, dans lequel lors de la préparation du matériau de remplissage, une densité du matériau de remplissage est augmentée par au moins un ajout.

11. Procédé selon la revendication 10, dans lequel comme l'au moins un ajout, une grenaille d'acier et/ou une magnétite est utilisée.

12. Procédé selon l'une des revendications 9 à 11, dans lequel le même coffrage est utilisé pour réaliser plusieurs dispositifs de lestage (4).

13. Procédé selon l'une des revendications 9 à 12, dans lequel le dispositif de lestage (4) est enduit par un revêtement en plastique ou un vernis.
